# DEMANDE DE BREVET EUROPEEN

(11) **EP 1 298 045 A2**
(43) Date de publication de la demande: **02.04.2003**
(21) Numéro de dépôt: 02292386.6
(22) Date de dépôt: 27.09.2002
(51) Int. Cl.: B62J 1/28, B62J 1/12

(54) **Selle modulable**

(30) Priorité: 27.09.2001 FR 0112464
(71) Demandeur: Renault s.a.s., 92100 Boulogne Billancourt (FR)
(72) Inventeur: Barbieri, Massimo, 75116 Paris (FR); Quirin, Luc, 75011 Paris (FR)

(57) **Abrégé**

Selle modulable (10), comportant une partie avant (11) destinée au conducteur et une partie arrière (12) destinée à un passager, caractérisé en ce que la partie arrière (12) peut être au moins réglable d'une position escamoté vers une position haute formant un appui dorsal du conducteur.

## Description

L'invention concerne une selle modulable, et plus particulièrement une selle équipant un véhicule à deux ou trois roues, qui comporte un rangement localisé sous ladite selle, et destinée à recevoir un passager avant et un passager arrière.

Tel que représenté dans la publication DE-A-42 01 207, il est connu d'utilisé une selle, équipant un véhicule du type deux roues, destinée à fermer un espace de rangement. Ces espaces de rangement peuvent recevoir que des objets de petite taille. Si le conducteur souhaite amener des objets plus long, tel qu'un rouleau d'affiche par exemple, il est obligé de l'attacher sur la selle à la place du passager arrière.

Cette selle monobloc nécessite la descente des deux passagers pour avoir accès au rangement. De plus, une telle selle ne peut pas être adaptée à la morphologie du conducteur lorsqu'il est seul sur son véhicule, en particulier en ce qui concerne la création d'un appui de la partie inférieure ou supérieure du dos.

Il existe dans le commerce des véhicules deux roues qui comportent des selles à deux étages, procurant au conducteur un appui, appelé couramment dosseret, pour la partie inférieur du dos. Les selles à deux étages placent le passager arrière à un niveau supérieur, par rapport au conducteur, ce qui expose ledit passager, en fonction de sa taille, aux remous aérodynamiques. De plus la position surélevé du passager déplace le centre de gravité du véhicule vers le haut.

Les dosserets fixes créer par des selles à deux étages, correspondent à un compromis qui ne convient pas à un panel important de morphologie. En fonction du gabarit de la personne le dosseret peut ne pas être en contact avec la partie inférieure du dos ou gêner la conduite, en ne permettant pas une bonne installation, et en obligeant à avoir une position mal adaptée.

La publication EP-A-0517265 décrit un coffre de rangement amovible permettant de créer un dossier pour le passager arrière. La conception d'un tel coffre de rangement ne permet pas de le transporté aisément, en particulier lorsqu'il est chargé. De plus la poignée de transport réalisée à l'arrière du coffre de rangement est vite salie par les projections de la roue arrière.

Afin de pallier ces inconvénients, l'invention a pour objet une selle biplace qui comporte une partie arrière pouvant être réglable afin de servir d'appui pour la partie inférieure et/ou supérieure du dos du conducteur.

L'invention à également pour objet, une selle biplace dont la partie destinée à recevoir le passager est réglable en hauteur.

L'invention a également pour objet, une selle biplace qui ferme en partic un accès à un espace de rangement.

L'invention a également pour objet, un espace de rangement ouvert dans sa partie arrière afin de pouvoir transporter des objets long.

L'invention a également pour objet, un coffre de rangement amovible pouvant être facilement transportable sans se salir les mains et les vêtements.

D'autres caractéristiques et avantages de l'invention apparaîtront à la lecture de la description d'exemples de réalisation d'une selle modulable aux dessins annexés dans lesquels :
- La figure 1 représente une vue latéral d'un véhicule équipé d'une selle selon l'invention, dans une position basse.
- La figure 2 représente une vue latéral d'un véhicule équipé d'une selle selon l'invention, dans une position créant un dosseret.
- La figure 3 représente une vue latéral d'un véhicule équipé d'une selle selon l'invention, dans une position créant un dossier.
- La figure 4 représente un coffre de rangement selon l'invention.

Dans la description qui suit le terme dosseret concernera en particulier un appui dorsal pour la partie inférieure du dos et le terme dossier concernera un appui dorsal pour la partie supérieure du dos. Les parties connues en soit, d'un véhicule deux ou trois roues, et qui ne sont pas directement liées à l'invention, ne seront pas décrites.

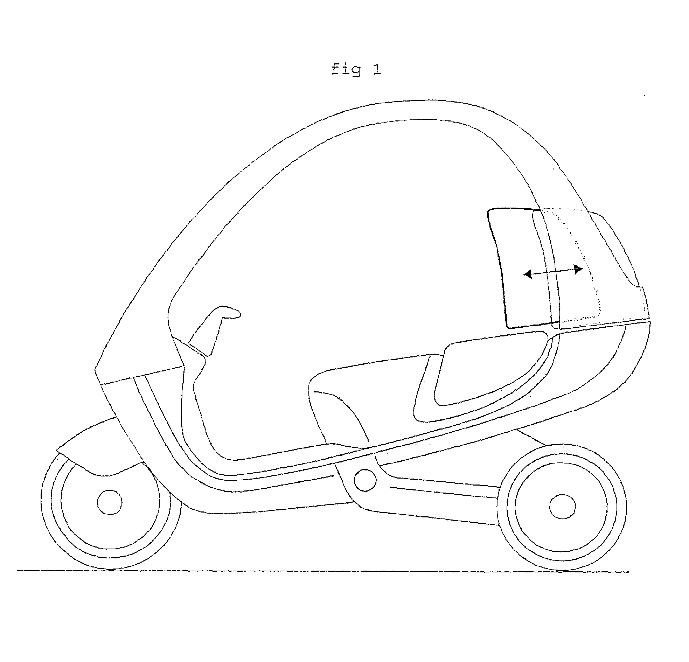

Tel que représenté à la figure 1, le véhicule 1 possède une structure qui comporte, entre autre, une selle constituée 10 d'au moins une partie avant 11 et une partie arrière 12. La partie avant 11 est destinée à recevoir le conducteur et la partie arrière 12 étant destinée à recevoir un passager. Les parties avant 11 et arrière 12 de la selle 10 sont dans l'alignement l'une de l'autre et forme une surface d'assise sensiblement continue et uniforme. La partie arrière 12 de la selle 10 est un élément de fermeture de l'accès à un espace de rangement, localisé sous la partie arrière 12 de la selle 10 et pouvant se prolonger dans la structure arrière 2 et/ou sous la partie avant 11 de la selle 10.

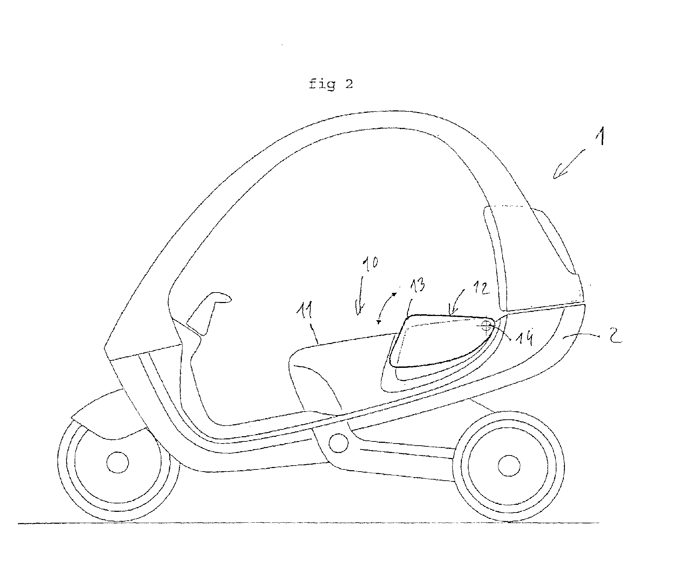

Tel que représenté à la figure 2, la partie arrière 12 de la selle 10 comporte des moyens de réglage qui permettent de déplacer, l'extrémité avant 13 de la partie arrière 12 de la selle 10, d'une position escamotée à une position de création d'un dosseret d'appui dorsal du conducteur, installé sur la partie avant 11 de la selle 10. L'extrémité avant 13 de la partie arrière 12 est monté à basculement autour d'un axe 14 porté par le moyen de rehausse de l'extrémité avant 13. Un moyen de verrouillage permet de conserver l'extrémité arrière 15 de la partie arrière 12 de la selle 10 en contact avec l'habillage de la structure.

Le moyen de rehausse peu comporter différentes positions d'arrêt afin d'obtenir des positions de dosseret plus ou moins proéminentes.

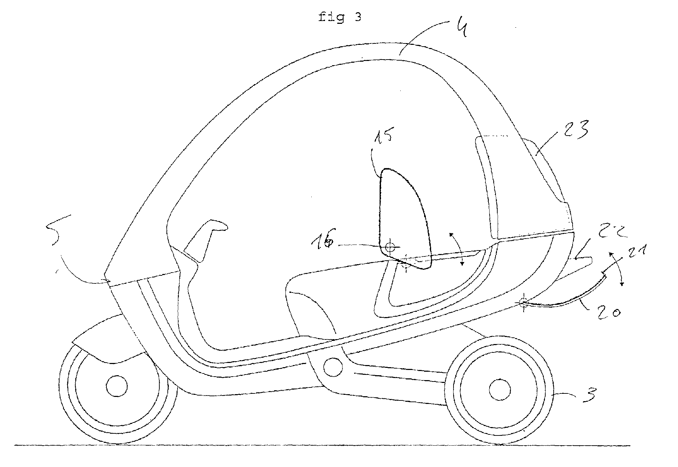

Tel que représenté à la figure 3, la partie arrière 12 de la selle 10 peut être pivoté autour d'un axe 16 localisé à son extrémité avant 13, afin de former un dossier. La selle se retrouve alors dans une position sensiblement verticale. Cette position étant utilisé également pour avoir accès à l'espace de rangement situé au-dessous de la selle, il important de prévoir un couvercle d'obturation dudit espace de rangement, autre que la partie arrière de la selle.

Tel que représenté à la figure 3, l'espace de rangement localisé sous la selle, se prolonge et débouche vers l'extérieur à l'arrière du véhicule. Une trappe de fermeture, formée d'une surface plane montée à pivotement autour d'une charnière portée par la structure du véhicule, vient obturer l'espace de rangement lorsque des objets de taille normale y sont disposé. Un rebord sensiblement perpendiculaire à la surface est porté par cette dernière. La trappe est pourvue d'un moyen de verrouillage en position de fermeture, par exemple par l'intermédiaire d'une serrure fermant à clef. La trappe peut également comporter un verrouillage en position ouverte, afin que ladite trappe soit immobile pendant le roulage du véhicule.

Dans la position ouverte, la trappe abrite les objets des projections créées par la roue arrière. Avantageusement la trappe porte un catadioptre qui permet de visualisé la position de ladite trappe.

Lorsque des objets long doivent être disposés dans l'espace de rangement, il suffit d'ouvrir la trappe, de glisser les objets dans ledit espace de rangement, et de les maintenir, par exemple avec une sangle élastique. La selle du passager arrière reste alors libre pour recevoir une personne.

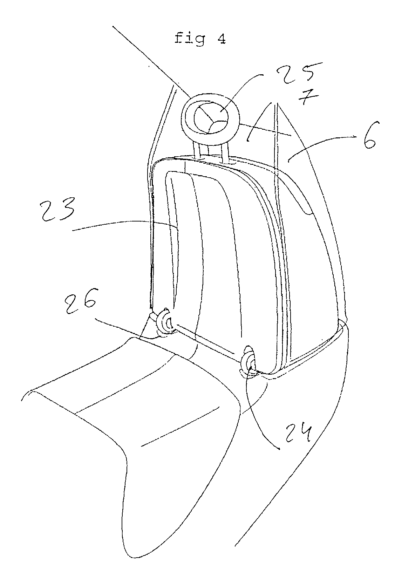

En arrière de la place du passager arrière, est disposé un coffre de rangement amovible, tel que représenté aux figures 1 à 4. Ce coffre est lié à la structure du véhicule par l'intermédiaire de moyens connues en soit, par exemple des glissières coopérant avec des pions en forme de T. Un couvercle est réalisé sur le coffre de manière à pouvoir l'ouvrir lorsqu'il est monté sur le véhicule. Afin de pouvoir transporter le coffre de rangement, celui-ci est pourvu de roulettes latérales et d'une poignée escamotable. De plus, le coffre de rangement comporte une partie, recouverte d'un revêtement formant dossier, dirigé vers le passager arrière afin de lui fournir un appui dorsal. Les roulettes du coffre de rangement coopèrent avec des rainures formées dans l'habillage du véhicule.

Les roulettes peuvent être escamotables dans le coffre de rangement.

Tel que représenté à la figure 1, le véhicule comporte un toit qui s'étends de la partie arrière vers la partie avant, des parties latérales de ce toit formes au niveau de la partie arrière, un support du coffre de rangement. Une traverse arrière reliant les parties latérales forme une butée du coffre de rangement.

Le démontage du coffre de rangement s'effectue par un déplacement vers l'avant du véhicule. Préalablement au déplacement, le déverrouillage peut être effectué par la levée de la poignée de transport qui comporte alors une première position de déverrouillage du coffre, une position intermédiaire de sortie du véhicule et une troisième position de roulage. La poignée peut comporter une serrure destinée à interdire le démontage du coffre de rangement par une personne non autorisée. Cette serrure peut également servir à verrouiller le couvercle du coffre de rangement. Lorsque le coffre de rangement est monté sur le véhicule, la poignée 25 peut-être conformée de manière à ne pas abîmer le casque ou la tête du passager.

## Revendications

1. Selle modulable, comportant une partie avant destinée au conducteur et une partie arrière destinée à un passager, **caractérisé en ce que** la partie arrière peut être au moins réglable d'une position escamoté vers une position haute formant un appui dorsal du conducteur.

2. Selle modulable selon la revendication 1, **caractérisé en ce que** l'appui dorsal du conducteur est formé par une extrémité avant de la partie arrière de la selle.

3. Selle modulable selon la revendication 1, **caractérisé en ce que** l'appui dorsal du conducteur est formé par le pivotement de la partie arrière de la selle, autour d'un axe transversal qui coopère avec une extrémité avant de ladite partie arrière, d'une position basse vers une position sensiblement verticale.

4. Selle modulable selon la revendication 1, **caractérisé en ce qu'**un espace de rangement localisé sous la selle débouche vers l'extérieure à l'arrière du véhicule, une trappe venant obturer ledit espace de rangement lorsque des objets de taille normale y sont disposés.

5. Selle modulable selon la revendication 1, **caractérisé en ce qu'**en arrière de la selle est disposé un coffre de rangement amovible comportant des roulettes destinées au transport dudit coffre.

6. Selle modulable selon la revendication 5, **caractérisé en ce que** le coffre de rangement comporte une poignée ayant au moins une position destinée au roulage dudit coffre de rangement.

7. Selle modulable selon la revendication 6, **caractérisé en ce que** la poignée du coffre de rangement forme un appui-tête.

8. Selle modulable selon la revendication 5, **caractérisé en ce que** le coffre de rangement forme un dossier pour le passager.
